# EUROPEAN PATENT APPLICATION

(11) **EP 4 799 994 A1**
(43) Date of publication of application: **02.09.2026**
(21) Application number: 26158546.7
(22) Date of filing: 13.02.2026
(51) Int. Cl.: C04B 41/00, C04B 41/52, C04B 41/89, F01D 5/28

(54) **EBC FOR IMPROVED TGO AND SILICON-BASED BONDCOAT**

(30) Priority: 28.02.2025 US 202519066821
(71) Applicant: General Electric Company, Cincinnati, Ohio 45215 (US)
(72) Inventor: WAN, Julin, Niskayuna, 12309 (US)
(74) Representative: Openshaw & Co.

(57) **Abstract**

A coated component (10), along with methods of its formation, is provided that includes a silicon-containing substrate (12) having a surface (14); a bondcoat (16) on the surface (14) of the silicon-containing substrate (12), wherein the bondcoat (16) comprises silicon; a thermally grown oxide layer (20) on the bondcoat (16), wherein the thermally grown oxide layer (20) comprises a borosilicate glass (24) and a mullite-based material (28); and an environmental barrier coating (18) on the thermally grown oxide layer (20).

## Description

### FIELD

The present disclosure generally relates to environmental barrier coatings for coated components, along with methods of their formation.

### BACKGROUND

Silicon-based materials are employed for high temperature components of gas turbine engines such as, for instance, airfoils (e.g., blades, vanes), combustor liners, and shrouds. The silicon-based materials may include silicon-based monolithic ceramic materials, intermetallic materials, and composites. For example, silicon-based ceramic matrix composites (CMCs) may include silicon-containing fibers reinforcing a silicon-containing matrix phase.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional schematic view of an exemplary coated component including a silicon-containing substrate coated with a bondcoat and an environmental barrier coating;
FIG. 2 is a cross-sectional schematic view of an exemplary coated component including a silicon-containing substrate coated with a bondcoat, a thermally grown oxide layer on the bondcoat, and an environmental barrier coating; and
FIG. 3 is a diagram of an exemplary method of forming a coated component described herein.

### DEFINITIONS

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the terms "first", "second", and "third" may be used interchangeably to distinguish one component from another and are not intended to signify location or importance of the individual components.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "RE" refers to a rare earth element or a mixture of rare earth elements. More specifically, the " RE" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

As used herein, "silica" refers to a silicon oxide in the form of SiO2. Conversely, "elemental silicon" refers to silicon without any alloying materials present, outside of incidental impurities. It is sometimes referred to in the art as "silicon metal." Elemental silicon has a melting point of about 1414 °C.

As used herein, "alumina" refers to an aluminum oxide in the form of Al₂O₃.

As used herein, the term "mullite" generally refers to a mineral containing alumina and silica (i.e., an aluminum silicate). That is, mullite is a chemical compound of alumina and silica. Typically, mullite may have an alumina (Al₂O₃) and silica (SiO₂) ratio of about 3 to 2 (e.g., within 10 mole % of 3 to 2 of alumina to silica). However, a ratio of about 2 to 1 has also been reported as mullite (e.g., within 10 mole % of 2 to 1 of alumina to silica).

As used herein, the term "boromullite" generally refers to a mineral containing aluminum, boron, silicon, and oxygen (i.e., an aluminum silicate). That is, boromullite is a chemical compound of alumina, boron oxide, and silica. In embodiments, the boromullite may have a chemical formula within 10 mole % of 9 to 2 of alumina to boron oxide. For instance, boromullite may be within 10 mole % of a combination of Al₂SiO₅ and Al₅BO₉, to form a mixture within 10 mole % of Al₉BSi₂O₁₉.

As used herein, the term "borosilicate glass" generally refers to a glass with silica and boron trioxide as the main glass-forming constituents.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

Silicon carbide and silicon nitride ceramics undergo oxidation in dry, high temperature environments. This oxidation produces a passive, silicon oxide scale on the surface of the material. In moist, high temperature environments containing water vapor, such as a turbine engine, both oxidation and recession occurs due to the formation of a passive silicon oxide scale and subsequent conversion of the silicon oxide to gaseous silicon hydroxide. To prevent recession in moist, high temperature environments, environmental barrier coatings (EBCs) are deposited onto silicon carbide and silicon nitride materials.

Currently, EBC materials are made out of rare earth silicate compounds. These materials seal out water vapor, preventing it from reaching the silicon oxide scale on the silicon carbide or silicon nitride surface, thereby preventing recession. Such materials cannot prevent oxygen penetration, however, which results in oxidation of the underlying substrate. Oxidation of the substrate yields a passive silicon oxide scale, along with the release of carbonaceous or nitrous oxide gas. The carbonaceous (i.e., CO, CO₂) or nitrous (i.e., NO, NO₂, etc.) oxide gases cannot escape out through the dense EBC and thus, blisters form, which can cause spallation of the EBC. The use of a silicon bondcoat has been the solution to this blistering problem to date. The silicon bondcoat forms a thermally grown oxide (TGO) layer of silica beneath the EBC without liberating a gaseous by-product.

However, pure silica has a strong tendency to devitrify or crystallize. Crystalline silica tends to crack due to a phase transformation, thus crystalline silica threatens the mechanical integrity of the EBC. Thus, an improved TGO layer would be welcomed within the art.

Coated components are generally provided that have a bondcoat formulated to form an improved TGO layer between a bondcoat and an EBC, along with methods of its formation. Generally, the bondcoat includes a silicon-based matrix and a strengthening phase, which, upon oxidation during use of the coated component, forms the TGO layer that includes a dispersion of aluminum silicate-based crystals within a silicate-based oxide matrix. Without wishing to be bound by any particular theory, it is believed the aluminum silicate-based crystals (e.g., a mullite-based material) may form crystals within the silicate-based oxide matrix (e.g., a borosilicate glass) which can help strengthen the TGO layer against creep. Thus, the resulting TGO layer may have stronger resistance to crystallization than pure silica, while having a greater creep strength. Thus, the TGO layer within the EBC may remain amorphous for longer time, effectively extending the life of the EBC system. The TGO layer is generally formed from constituents within the bondcoat, as explained in greater detail below.

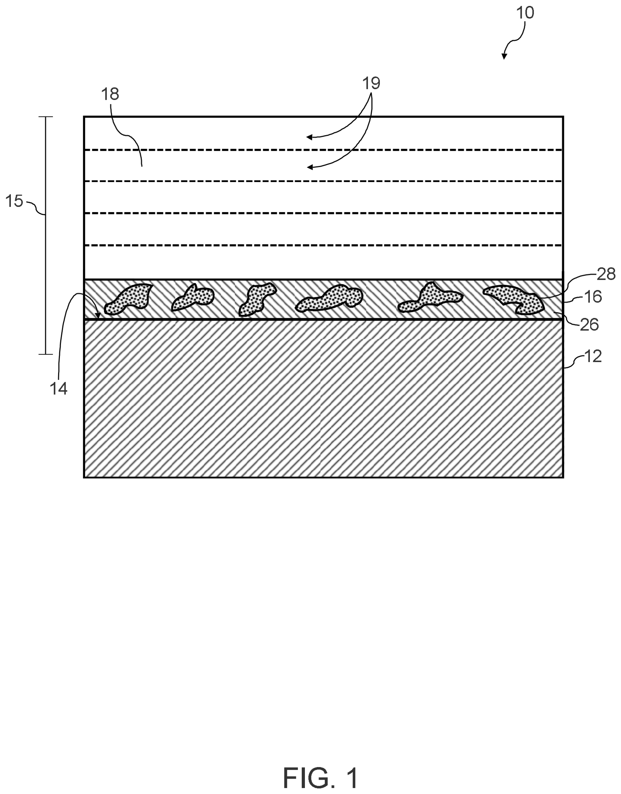

Referring to FIG. 1, an exemplary coated component 10 is shown including a silicon-containing substrate 12 having a surface 14 with an EBC system 15 thereon. The EBC system 15 includes a bondcoat 16 on the surface 14 of the silicon-containing substrate 12, and an EBC 18 on the bondcoat 16. Generally, the bondcoat 16 may be utilized between the substrate 12 and the EBC 18 to enhance the adhesion of the EBC 18 to the substrate 12 and, potentially, function as a sacrificial oxidation layer within the EBC system 15.

Generally, the bondcoat 16 includes a silicon-based matrix and a strengthening phase dispersed therein. Referring to FIG. 1, the bondcoat 16 may generally include multiple based phases, such as a silicon-based matrix 26 (e.g., a boron-doped silicon or elemental silicon) and a strengthening phase 28 (e.g., comprising an aluminum silicate such mullite, boromullite, or a mixture thereof) dispersed therein. In embodiments, the bondcoat may include 75 wt% to 99.9wt% of the silicon-based matrix 26 and 0.1 wt% to 25 wt% of the strengthening phase 28.

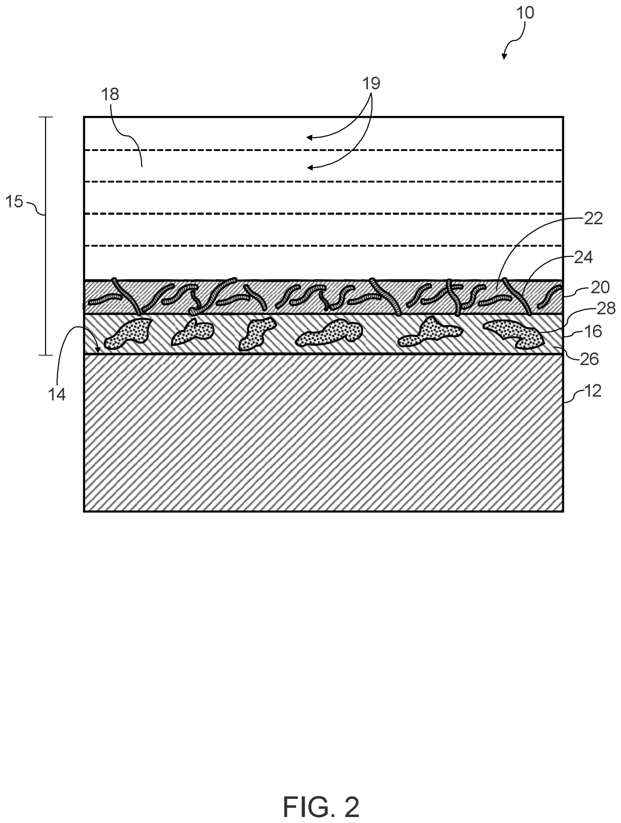

Either or both the silicon-based matrix 26 and/or the strengthening phase 28 includes boron, such as in a boron-doped silicon or in a boromullite, such that a borosilicate glass can be formed in a subsequent TGO layer (FIG. 2).

In one embodiment, the silicon-based matrix 26 includes a boron-doped silicon and the strengthening phase 28 includes a mullite-based material (e.g., mullite). For instance, the bondcoat 16 may be at least 50 wt% of the boron-doped silicon as the silicon-based matrix 26 (e.g., 50 wt% to 95 wt% of the boron-doped silicon). Such a boron-doped silicon may include 0.1 wt% to 10 wt% of boron and 90 wt% to 99.9 wt% of silicon (i.e., elemental silicon), such as 0.1 wt% to 5 wt% of boron and 95 wt% to 99.9 wt% of silicon. Without wishing to be bound by any particular theory, it is believed that oxidation of such a bondcoat 16 forms a TGO layer 20 (FIG. 2) that includes a borosilicate glass from the oxidation of the boron-doped silicon. The mullite-based material in the bondcoat 16 may form part of the TGO layer 20 as the TGO layer 20 grows and the bondcoat 16 gets consumed upon exposure to oxygen, where it may go through a solution-reprecipitation process within the borosilicate glass and change shape. The mullite-based material may also react with the borosilicate glass and change the composition of the latter.

In another embodiment, the bondcoat 16 may include a silicon-based matrix 26 comprising silicon (e.g., elemental silicon or a boron-doped silicon) and a strengthening phase 28 comprising boromullite. For instance, the bondcoat 16 may be at least 50 wt% of the silicon as the silicon-based matrix 26 (e.g., 50 wt% to 95 wt% of the silicon). Since boron is present in the boromullite, the silicon within the bondcoat 16 may be in the form of elemental silicon. Without wishing to be bound by any particular theory, it is believed that oxidation of such a bondcoat 16 forms a TGO layer 20 that includes borosilicate glass from the oxidation of the silicon and the boromullite together. The mullite-based material may migrate from the bondcoat 16 into the TGO layer 20, where it crystalizes within the borosilicate glass.

Generally, mullite has a relatively slow diffusion rate for oxygen at all temperatures of interest, even up to 1650 °C (e.g., 1200 °C to 1650 °C). At temperatures over 1200 °C, it is believed that the only other crystalline oxide that has lower oxygen diffusion rate than mullite is alumina, which has a very high expansion coefficient compared to the substrate 12 and cannot be deposited as dense coatings without spallation. Although mullite has a coefficient of thermal expansion ("CTE") that is similar to that of SiC-based CMC substrate and that of silicon (of the silicon-based matrix 26), the CTE of mullite is not an exact match to SiC or Si. For example, mullite has a CTE of about 5.5x10-6 /K, while boromullite has a CTE of about 4.9x10-6 /K. Both mullite and boromullite have good compatibility with silicon and with CMC, thus leading to mechanically stability of a bondcoat 16.

However, this slight mismatch of CTE could lead to problems related to thermal expansion, such as cracking and/or delamination, if the bondcoat 16 is too thick. For example, it is believed that a bondcoat 16 having a thickness 508 µm would lead to problems related to the CTE mismatch after repeated exposure to the operating temperatures. On the other hand, it is believed that a bondcoat 16 having a maximum thickness of 381 µm or less, such as 25.4 µm to 381 µm, is better suited to survive such operating temperatures without significant problems from the CTE-mismatch. In one particular embodiment, the bondcoat 16 has a maximum thickness of 254 µm, such as 75 µm to 254 µm. In particular embodiments, the multiple phases of the bondcoat 16 have substantially the same thickness. For example, the silicon-based phase may have a first thickness and the mullite-based phase may have a second thickness, with the first thickness being within 5% of the second thickness.

Referring to FIG. 2, the bondcoat 16 includes silicon and constituents configured to form, upon oxidation of the bondcoat 16, a TGO layer 20 that includes a dispersion of aluminum silicate-based crystals (e.g., a mullite-based material) within a silicate-based oxide matrix (e.g., borosilicate glass). The TGO layer 20 is generally formed on the bondcoat 16 between the bondcoat 16 and the EBC 18.

As stated, the TGO layer 20 includes the silicate-based oxide matrix (e.g., borosilicate glass) and the aluminum silicate-based crystals (e.g., mullite-based material). Silica may also be present within the TGO layer 20, which can form upon oxidation of the silicon within the bondcoat 16. Without wishing to be bound by any particular theory, it is believed that the dispersion of aluminum silicate-based crystals (e.g., mullite-based material) is present in a sufficient amount to substantially stabilize the amorphous structure of the TGO layer 20, particularly of the silicate-based oxide matrix (e.g., borosilicate glass) within the TGO layer 20. Thus, the TGO layer 20 is more resistant to creep at high temperature than a borosilicate glass TGO layer that does not contain the dispersion of aluminum silicate-based crystals (e.g., mullite-based material). By remaining amorphous, the silicate-based oxide matrix (e.g., borosilicate glass) within the TGO layer 20 helps to avoid cracking during thermal cycling. Without wishing to be bound by any particular theory, it is believed that if the TGO layer 20 is crystalline, it assumes the form of cristobalite, which goes through a reversible phase transformation at around 270 °C. This phase transformation may involve a volume change that can lead to cracking of the TGO layer 20.

In one embodiment, the TGO layer 20 comprises 75 wt% to 99.9 wt% of the silicate-based oxide matrix (e.g., borosilicate glass). In one embodiment, the TGO layer 20 comprises 0.1 wt% to 25 wt% of the aluminum silicate-based crystals (e.g., mullite-based material). Without wishing to be bound by any particular theory, it is believed that excessive aluminum silicate-based crystals in the TGO layer 20 may lead to phase separation, since the aluminum silicate-based crystals may form a mullite-rich phase that crystallizes while the silicate-based oxide matrix remains amorphous.

Generally, the aluminum silicate-based crystals provide mechanical stability within the TGO layer 20. Referring to FIG. 2, the TGO layer 20 shows aluminum silicate-based crystals 22 dispersed within the silicate-based oxide matrix 24. In embodiments, at least a portion of the aluminum silicate-based crystals 22 span the TGO layer 20. As such, the portion of the aluminum silicate-based crystals 22 spanning the TGO layer 20 may interact with (e.g., be bonded with) the bondcoat 16 and the overlying EBC 18 to provide mechanical stability therebetween. In embodiments, at least a portion of the aluminum silicate-based crystals 22 are interlocking with each other within the TGO layer 20. Thus, the aluminum silicate-based crystals 22 may form an interlocking network that spans the TGO layer 20, and thus provide a mechanical connection between the bondcoat 16 and the overlying EBC 18.

In embodiments, the aluminum silicate-based crystals 22 may be elongated in nature, such as having an aspect ratio that is greater than 5. For instance, the aluminum silicate-based crystals 22 may have an aspect ratio of 10 to 1000.

The aluminum silicate-based crystals 22 may include a mullite-based material, such as mullite, boromullite, or both (e.g., a mixture thereof). The particular composition of the mullite-based material of the aluminum silicate-based crystals 22 within the TGO layer 20 may be controlled based on the composition of the bondcoat 16, which forms the TGO layer 20 upon oxidation during use of the coated component. That is, the bondcoat 16 may, upon exposure of the coated component to an oxidating environment, result in migration and oxidation of the TGO forming compositions to form the borosilicate glass in situ from the bondcoat 16 constituents and migrate the mullite-based material therein from the bondcoat 16.

In embodiments, the substrate 12 of FIG. 1 and FIG. 2 is formed from a silicon-containing material, such as a ceramic matrix composite ("CMC") material. As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

As stated above, the bondcoat 16 and TGO layer 20 may be used in conjunction with an EBC 18 to form a coated component 10 with an improved effective life for the EBC system 15. As used herein, environmental barrier coating or "EBC" refers to a coating comprising one or more layers of ceramic materials, each of which provides specific or multi-functional protections to the underlying CMC. EBCs generally include a plurality of layers, such as rare earth silicate coatings (e.g., rare earth disilicates such as slurry or air plasma spray deposited ("APS-deposited") yttrium ytterbium disilicate (YbYDS)), alkaline earth aluminosilicates (e.g., comprising barium-strontium-aluminum silicate (BSAS), such as having a range of compositions of BaO, SrO, Al₂O₃, SiO₂, or combinations thereof), hermetic layers (e.g., a rare earth disilicate), outer coatings (e.g., comprising a rare earth monosilicate, such as slurry or APS-deposited yttrium monosilicate (YMS)), or combinations thereof. One or more layers may be doped as desired, and the EBC 18 may also be coated with an abradable coating.

The EBC 18 may include any combination of one or more layers formed from materials selected from typical EBC 18 or thermal barrier coating ("TBC") layer chemistries, including but not limited to rare earth silicates (e.g., mono-silicates and di-silicates), aluminosilicates (e.g., mullite, barium strontium aluminosilicate (BSAS), rare earth aluminosilicates, etc.), hafnia, zirconia, stabilized hafnia, stabilized zirconia, rare earth hafnates, rare earth zirconates, rare earth gallium oxide, etc. The EBC 18 may include a hafnia layer, an alumina layer, or both. Alternatively or additionally, the EBC 18 may include a rare earth disilicate layer, a rare earth monosilicate layer, or both. The EBC 18 may be formed from a plurality of individual layers 19. In the embodiments shown, EBC 18 may include any combination of a hermetic layer, silicate layer, or any of the layers described above.

The coated component 10 is particularly suitable for use as a component found in high temperature environments, such as those present in gas turbine engines, for example, combustor components, turbine blades, shrouds, nozzles, heat shields, and vanes. In particular, the coated component 10 may be a CMC component positioned within a hot gas flow path of the gas turbine such that the EBC system forms an environmental barrier for the underlying substrate 12 to protect the component within the gas turbine when exposed to the hot gas flow path. In particular, the coated component 10 may be particularly suitable for a rotating component subjected to prolonged use under strong centrifugal force.

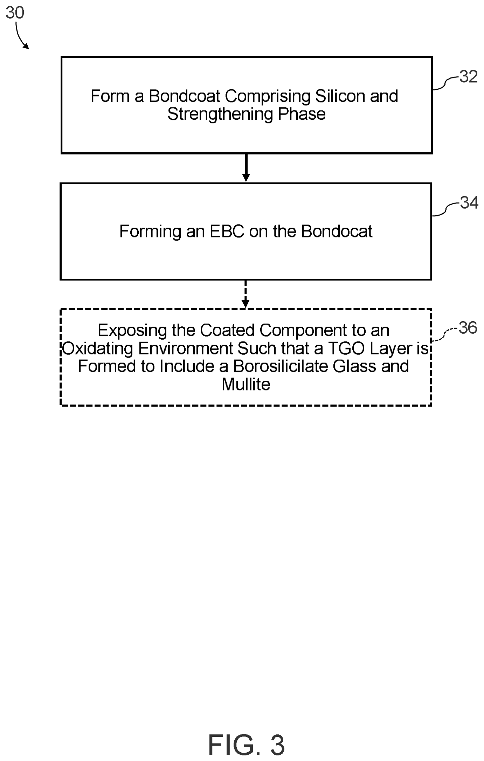

Methods are also generally provided for forming coated components, such as any of the exemplary coated components described above. Referring to FIG. 3, an exemplary method 30 is shown for forming a coated component, such as described above. At 32, bondcoat is formed on a surface of a substrate (e.g., a silicon-containing substrate), with the bondcoat comprising a silicon-based matrix with a strengthening phase dispersed therein. At 34, a EBC is formed on the bondcoat. At 36, the coated component is optionally exposed to an oxidating environment such that a TGO layer is formed on the bondcoat between the bondcoat and the environmental barrier coating, such as described above.

Further aspects are provided by the subject matter of the following clauses:
A coated component, comprising: a silicon-containing substrate having a surface; a bondcoat on the surface of the silicon-containing substrate, wherein the bondcoat comprises a silicon-based matrix with a strengthening phase dispersed therein; and an environmental barrier coating on the bondcoat.

The coated component as in any preceding clause, wherein the strengthening phase comprises an aluminum silicate.

The coated component as in any preceding clause, wherein the aluminum silicate comprises mullite or boromullite.

The coated component as in any preceding clause, wherein the silicon of the bondcoat is a boron-doped silicon.

The coated component as in any preceding clause, wherein the bondcoat comprises 50 wt% to 95 wt% of the boron-doped silicon.

The coated component as in any preceding clause, wherein the boron-doped silicon comprises 0.1 wt% to 10 wt% of boron and 90 wt% to 99.9 wt% of silicon.

The coated component as in any preceding clause, wherein the strengthening phase comprises mullite.

The coated component as in any preceding clause, wherein the bondcoat comprises elemental silicon.

The coated component as in any preceding clause, wherein the strengthening phase comprises boromullite.

The coated component as in any preceding clause, wherein the boromullite has a chemical formula within 10 mole % of 9 to 2 of alumina to boron oxide.

The coated component as in any preceding clause, wherein the bondcoat comprises 0.1 wt% to 25 wt% of the boromullite.

The coated component as in any preceding clause, further comprising: a thermally grown oxide layer positioned between the bondcoat and the environmental barrier coating, wherein the thermally grown oxide layer comprises a dispersion of aluminum silicate-based crystals within a silicate-based oxide matrix.

The coated component as in any preceding clause, wherein the thermally grown oxide comprises 0.1 wt% to 25 wt% of the dispersion of aluminum silicate-based crystals and 75 wt% to 99.9 wt% of the silicate-based oxide matrix.

The coated component as in any preceding clause, wherein the aluminum silicate-based crystals comprise a mullite-based material.

The coated component as in any preceding clause, wherein the silicate-based oxide matrix comprises a borosilicate glass.

The coated component as in any preceding clause, wherein at least a portion of the aluminum silicate-based crystals spans the thermally grown oxide layer.

The coated component as in any preceding clause, wherein the aluminum silicate-based crystals are interlocking within the thermally grown oxide layer.

The coated component as in any preceding clause, wherein the aluminum silicate-based crystals have an aspect ratio that is greater than 5.

The coated component as in any preceding clause, wherein the substrate is a ceramic matrix composite.

A gas turbine engine including the coated component as in any preceding clause, wherein the environmental barrier coating of the coated component is exposed to a hot gas path within the gas turbine engine.

A method of forming the coated component as in any preceding clause.

A method of forming a coated component, the method comprising: forming a bondcoat on a surface of a silicon-containing substrate, wherein the bondcoat comprises a silicon-based matrix with a strengthening phase dispersed therein; and forming an environmental barrier coating on the bondcoat; wherein, upon subsequent exposure of the coated component to an oxidating environment, a thermally grown oxide layer is formed on the bondcoat between the bondcoat and the environmental barrier coating, wherein the thermally grown oxide layer comprises a dispersion of aluminum silicate-based crystals within a silicate-based oxide matrix.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A coated component (10), comprising:
a silicon-containing substrate (12) having a surface (14);
a bondcoat (16) on the surface (14) of the silicon-containing substrate (12), wherein the bondcoat (16) comprises a silicon-based matrix (26) with a strengthening phase (28) dispersed therein; and
an environmental barrier coating (18) on the bondcoat (16).

2. The coated component as in claim 1, wherein the strengthening phase (28) comprises an aluminum silicate.

3. The coated component as in claim 2, wherein the aluminum silicate comprises mullite or boromullite.

4. The coated component as in claim 1, wherein the silicon of the bondcoat (16) is a boron-doped silicon.

5. The coated component as in claim 4, wherein the bondcoat (16) comprises 50 wt% to 95 wt% of the boron-doped silicon.

6. The coated component as in claim 4, wherein the boron-doped silicon comprises 0.1 wt% to 10 wt% of boron and 90 wt% to 99.9 wt% of silicon.

7. The coated component as in claim 4, wherein the strengthening phase (26) comprises mullite.

8. The coated component as in claim 1, wherein the bondcoat (16) comprises elemental silicon.

9. The coated component as in claim 8, wherein the strengthening phase (26) comprises boromullite.

10. The coated component as in claim 9, wherein the boromullite has a chemical formula within 10 mole % of 9 to 2 of alumina to boron oxide, and wherein the bondcoat (16) comprises 0.1 wt% to 25 wt% of the boromullite.

11. The coated component as in any preceding claim, further comprising:
a thermally grown oxide layer (20) positioned between the bondcoat (16) and the environmental barrier coating, wherein the thermally grown oxide layer (20) comprises a dispersion of aluminum silicate-based crystals within a silicate-based oxide matrix.

12. The coated component as in claim 11, wherein the thermally grown oxide (20) comprises 0.1 wt% to 25 wt% of the dispersion of aluminum silicate-based crystals and 75 wt% to 99.9 wt% of the silicate-based oxide matrix.

13. The coated component as in any of claims 11-12, wherein the substrate is a ceramic matrix composite, and wherein the aluminum silicate-based crystals comprise a mullite-based material, and wherein the silicate-based oxide matrix comprises a borosilicate glass.

14. The coated component as in any of claims 11-13, wherein at least a portion of the aluminum silicate-based crystals spans the thermally grown oxide layer (20), and wherein the aluminum silicate-based crystals are interlocking within the thermally grown oxide layer (20).

15. A method of forming a coated component, the method comprising:
forming a bondcoat (16) on a surface of a silicon-containing substrate, wherein the bondcoat (16) comprises a silicon-based matrix with a strengthening phase (26) dispersed therein; and
forming an environmental barrier coating (18) on the bondcoat (16); wherein, upon subsequent exposure of the coated component to an oxidating environment, a thermally grown oxide layer (20) is formed on the bondcoat (16) between the bondcoat (16) and the environmental barrier coating (18), wherein the thermally grown oxide layer (20) comprises a dispersion of aluminum silicate-based crystals within a silicate-based oxide matrix.
